# FASCICULE DE BREVET EUROPEEN

(11) **EP 1 687 610 B1**
(45) Date de publication et mention de la délivrance du brevet: **07.01.2009**
(21) Numéro de dépôt: 04816299.4
(22) Date de dépôt: 18.11.2004
(51) Int. Cl.: G01N 1/02, G01N 33/483, C12M 1/30, A61B 10/00

(54) **PROCEDE D'ANALYSE PAR HYBRIDATION MOLECULAIRE D'ACIDES NUCLEIQUES, ET TROUSSE POUR L'APPLICATION DE CE PROCEDE**
VERFAHREN ZUR ANALYSE MITTELS MOLEKULARER HYBRIDIERUNG VON NUKLEINSÄUREN SOWIE KIT ZUR DURCHFÜHRUNG DES VERFAHRENS
METHOD FOR ANALYSIS BY MOLECULAR HYBRIDATION OF NUCLEIC ACIDS AND KIT FOR CARRYING OUT SAID METHOD

(30) Priorité: 19.11.2003 BE 200300623
(43) Date de publication de la demande: 09.08.2006
(73) Titulaire: Faculté Universitaire des Sciences Agronomiques de Gembloux, 5030 Gembloux (BE)
(72) Inventeur: DUTRECQ, Olivier, B-5032 Bossière (BE); ROUSSEL, Sophie, B-1380 Lasne (BE); LEPOIVRE, Philippe, B-5030 Gembloux (BE); KUMMERT, Jean, B-5003 Saint Marc (BE); JIJAKLI, Mohammed, Haissam, B-1060 Saint-Gilles (BE)
(74) Mandataire: Brants, Johan P.E.
(86) Numéro de dépôt international: PCT/EP2004/013220
(87) Numéro de publication internationale: WO 2005/049862

(56) Documents cités:
- EP-A- 1 234 881
- WO-A-97/18009
- US-A- 5 238 649
- US-A1- 2002 026 157
- US-A1- 2003 113 906
- US-B1- 6 180 395
- MOLLER E M ET AL: "A SIMPLE AND EFFICIENT PROTOCOL FOR ISOLATION OF HIGH MOLECULAR WEIGHT DNA FROM FILAMENTOUS FUNGI, FRUIT BODIES, AND INFECTED PLANT TISSUES" 25 novembre 1992 (1992-11-25), NUCLEIC ACIDS RESEARCH, OXFORD UNIVERSITY PRESS, SURREY, GB, PAGE(S) 6115-6116 , XP000537441 ISSN: 0305-1048 le document en entier
- MANIATIS ET AL: "EXTRACTION,PURIFICATION, AND ANALYSIS OF MESSENGERS RNA FROM EUKARYOTIC CELLS" 1992, MOLECULAR CLONING. A LABORATORY MANUAL, PAGE(S) 72-787 , XP002969018 pages 10,11

## Description

La présente invention concerne un procédé d'analyse par hybridation moléculaire pour y détecter la présence d'acides nucléiques et une trousse pour l'application de ce procédé.

Parmi les procédés d'analyse par hybridation moléculaire d'acides nucléiques, la PCR (polymerase chain reaction) est de plus en plus largement utilisée. Elle est préférée à des méthodes d'analyse immunologiques, telles que l'ELISA, et ce en raison de sa plus grande sensibilité.

En outre, la PCR permet de développer, en fonction du but recherché par l'analyse, des méthodes ciblées, d'une très grande spécificité.

Néanmoins, certaines contraintes spécifiques sont liées à l'utilisation de la PCR. Une partie importante de ces contraintes concerne les protocoles de préparation des échantillons à analyser.

En effet, les matériaux biologiques peuvent contenir des substances qui sont susceptibles d'interférer avec les processus d'amplification de la PCR.

Les tissus frais sont susceptibles de contenir des quantités importantes de tels inhibiteurs. En outre, les phénomènes d'oxydation qui surviennent après le prélèvement de ces tissus augmentent l'effet inhibiteur de ces substances.

Pour éviter au maximum l'oxydation des tissus et la présence d'inhibiteurs lors d'analyses PCR, on utilise habituellement des techniques d'extraction et de purification des acides nucléiques cibles qui permettent de garantir une réaction PCR optimale.

Ainsi, on peut extraire les acides nucléiques et les purifier ensuite par différentes techniques, comme par exemple, purification par affinité, filtration sur gel ou précipitation par isopropanol / éthanol.

Ces techniques d'extraction et de purification peuvent durer jusqu'à plusieurs jours et sont coûteuses.

On s'est donc tourné progressivement vers des protocoles d'analyse plus simples ne nécessitant pas une purification ultérieure des acides nucléiques.

Dans une méthode de l'état de la technique, l'analyse d'acides nucléiques est effectuée sur un extrait brut de matériel biologique broyé. L'échantillonnage comporte un prélèvement de tissu à analyser sur du matériel frais ou stabilisé (soit par lyophilisation soit par congélation) et en quantité assez importante (200 - 400 mg). Les échantillons de tissus prélevés doivent être mis rapidement en présence du tampon de broyage. Il est également impératif de les maintenir le plus possible à basse température. Le tissu est broyé dans un broyeur manuel ou automatisé, ce qui donne l'extrait brut, broyé. On centrifuge cet extrait brut et on récupère le surnageant pour l'analyse. On peut ainsi effectuer cette analyse par hybridation moléculaire d'acides nucléiques à partir d'un extrait représentatif de la totalité des acides nucléiques du matériel biologique prélevé.

Malheureusement, cette technique présente l'inconvénient que lorsque les tissus sont fragmentés en dehors du tampon préalablement au broyage, l'oxydation des inhibiteurs, largement répandus dans les tissus (par exemple les composés phénoliques dans le cas de tissus végétaux), augmente considérablement les propriétés inhibitrices de la PCR de l'extrait brut obtenu. Ceci est d'autant plus gênant qu'une étape de purification des acides nucléiques n'est pas prévue, puisque le travail est effectué directement à partir ce cet extrait brut. De plus, les réactions enzymatiques des Rnases et Dnases qui interviennent peuvent également nuire à la réaction PCR en détériorant les acides nucléiques cibles.

Suivant cette technique, on doit travailler rapidement sur une grande quantité de matériel biologique frais, ou alternativement, prendre des mesures lourdes et consommatrices d'énergie comme la lyophilisation ou la congélation pour la conservation des échantillons.

On a proposé, par exemple dans EP-A-0 444 649, de prélever un échantillon de matériel végétal sur une membrane adsorbante que l'on presse sur un tissu frais. Une telle membrane peut être par exemple en nitrocellulose, en nylon ou nylon modifié. Les acides nucléiques doivent être fixés sur la membrane. Toutefois, cette technique reste marginale et peu utilisée, car elle pose des problèmes en terme de fiabilité.

Il reste donc désirable de trouver un procédé simple d'analyse par hybridation d'acides nucléiques, permettant d'obtenir des résultats aussi fiables qu'avec l'état de la technique, même s'il n'y a pas de purification d'acides nucléiques. If est également désirable de proposer un tel procédé qui permette de travailler avec des échantillons de matériel biologique en quantité faible par rapport à celles utilisées traditionnellement , et d'obtenir une bonne conservation des échantillons sans prendre de mesures compliquées.

On a maintenant trouvé avec surprise qu'il était possible, selon l'invention, d'obtenir un tel résultat en utilisant un procédé d'analyse par hybridation moléculaire d'acides nucléiques, tel que décrit à la revendication 1 qui comprend une étape de prélèvement d'échantillons de tissus profonds matériel biologique d'origine végétale par un dispositif de prélèvement comprenant des moyens de prélèvement abrasifs aptes à retenir du matériel biologique sous forme de cellules.

La présente invention concerne donc un procédé d'analyse par hybridation moléculaire d'acides nucléiques, comprenent les étapes suivantes :
- prélèvement d'échantillons de matériel d'origine végétale sur des tissus profonds par un dispositif de prélèvement (1, 13),
- séchage des échantillons chargés sur les moyens de prélèvements,
- une étape d'extraction des acides nucléiques, comprenant une étape d'immersion dans un tampon d'extraction des moyens de prélèvement (2, 15, 16) chargés de leurs échantillons respectifs de matériel d'origine végétale,
caractérisé en ce que les moyens de prélèvement comprennent une surface externe abrasive avec des aspérités aptes à faire une incision dans la surface dudit matériel et à retenir des cellules provenant de tissus profonds dudit matériel, les moyens de prélèvements abrasifs comportant une matière solide choisie dans le groupe consistant en la silice, le verre, les métaux, les fibres de carbone et les matières plastiques. Des modes de réalisations particuliers sont décrits aux revendications 2 à 13.

Par « moyens de prélèvement abrasifs », on entend désigner des moyens aptes à pénétrer, sous l'effet d'une pression, dans la surface du matériel biologique d'origine végétale et à y faire une incision en sorte que du matériel biologique sous forme de cellules des tissus profonds est retenu sur lesdits moyens.

Comme il sera illustré ci-après, on a constaté que les échantillons prélevés par ces moyens de prélèvement abrasifs se déshydratent très rapidement à l'air ambiant, ne s'oxydent pas, et peuvent se conserver plusieurs semaines. On a également constaté que les résultats d'analyse obtenus sont aussi fiables plusieurs semaines après le prélèvement que si l'analyse est effectuée immédiatement

Par « hybridation moléculaire », on entend désigner dans le cadre du présent texte toute réaction d'appariement de deux molécules d'acide nucléique à simple brin dont les séquences sont complémentaires pour former une molécule double brin stable.

Par « PCR » ou « polymerase chain reaction », on entend désigner dans le cadre du présent texte toute technique d'hybridation moléculaire qui permet de produire un nombre élevé de séquences d'ADN spécifiques à partir d'un génome complexe. La PCR permet d'amplifier de l'ADN ou de fart cible et de le révéler par des techniques de coloration, de marquage par sondes fluorescente, ou radioactives. Comme exemples non limitatifs, on peut citer l'IC-PCR, la RT-PCR, et la PCR en temps réel.

Par « matériel biologique », on entend désigner dans le cadre du présent texte tout matériel d'origine végétale

De préférence, le prélèvement d'échantillons de matériel biologique du procédé suivant l'invention est effectué à l'air ambiant. On travaille dans une atmosphère non saturée en humidité, de préférence une atmosphère sèche.

On peut laisser simplement les moyens abrasifs chargés de leur échantillon respectifs sous l'effet de cet air ambiant, ce qui permettra à l'échantillon de matériel biologique de sécher, et de se déshydrater. Cette mesure est suffisante, pour garantir une bonne conservation des échantillons. Ceci est très avantageux, car on n'est pas obligé de procéder de suite à l'analyse par hybridation d'analyse nucléiques.

On peut aussi accentuer le processus de séchage ou l'accélérer un utilisant des moyens de séchages supplémentaires tels que par exemple, un dispositif de soufflerie d'air froid ou chaud (sèche-cheveux ou autre), ou en augmentant la température (passage sur un radiateur, par exemple).

Grâce au procédé suivant l'invention, le prélèvement d'échantillons peut être effectué hors d'un laboratoire où aura lieu l'analyse. Dans ce cas, le procédé comporte une étape de transport des moyens de prélèvements abrasifs chargés de leurs échantillons respectifs de matériel biologique vers ledit laboratoire.

Pour le prélèvement d'échantillons de matériel biologique d'origine végétal, on peut donc travailler au champ sans se soucier de la possible dégradation des échantillons, ce qui n'est pas le cas d'autres méthodes de l'état de la technique, qui nécessitent des mesures de conservation lourdes telles que la congélation ou la lyophilisation des échantillons.

Les échantillons de matériel biologique reçus au laboratoire sur les moyens de prélèvement abrasifs peuvent être traités dès leur réception, ou suivant les impératifs et desiderata de la personne effectuant l'analyse.

Le procédé suivant l'invention comporte une étape d'extraction des acides nucléiques, comprenant une étape d'immersion dans un tampon d'extraction des moyens de prélèvement abrasifs chargés de leurs échantillons respectifs de matériel biologique, une étape d'agitation dans le tampon d'extraction, une étape de séparation, et une étape de récupération de jus clarifié contenant les acides nucléiques. Cette étape de séparation consiste de préférence en une centrifugation, dont le surnageant constitue le jus clarifié.

De préférence, l'analyse par hybridation moléculaire se fait par polymerase chain reaction (PCR).

L'analyse par hybridation moléculaire d'acides nucléiques du précédé suivant l'invention peut être effectuée en vue de déterminer la présence d'un agent pathogène dans le matériel biologique. Le matériel biologique consiste en du matériel d'origine végétale. L'invention trouve ainsi une de ses applications dans le domaine du diagnostic des maladies des plantes.

Le procédé selon l'invention peut aussi utiliser une trousse pour la mise en oeuvre du procédé d'analyse de l'invention. Cette trousse comporte un dispositif de prélèvement comprenant des moyens de prélèvement abrasifs aptes à retenir du matériel biologique sous forme de cellules.

Ces moyens de prélèvement peuvent comporter une matière solide présentant une surface externe abrasive, par exemple, la silice, le verre, les métaux, les fibres de carbone et les matières plastiques et toute autre matière appropriée, ainsi que les mélanges de ces matières. la surface externe abrasive comprend des aspérités aptes à retenir des cellules de matériel biologique, par exemple des pointes, des crochets, ou des poils. Les brosses à poils durs conviennent comme moyen de prélèvement abrasifs au sens du présent texte.

Les moyens de prélèvement abrasifs du dispositif de prélèvement d'échantillons de matériel biologique de la trousse peuvent être rigides ou flexibles (papier de verre), ou alternativement le dispositif de prélèvement peut comprendre un support apte à supporter les moyens de prélèvement abrasifs.

La trousse comprend des moyens de transport des moyens de prélèvement abrasifs, par exemple une pochette comportant de petites logettes pour placer individuellement les échantillons séchés suivant l'invention sur les moyens de prélèvement abrasifs.

La trousse comprend de préférence des moyens d'identification qui permettent la traçabilité des échantillons Ces moyens peuvent prendre toute forme adéquate (inscriptions, code-barre), et être placés sur le moyen de transport ou sur le support ou dans certains cas à même les moyens de prélèvements abrasifs (par exemple au verso d'un papier de verre).

Les trousses telles que décrites ci-dessus sont destinées aux échantillonneurs, qui ne font pas forcément eux-mêmes l'analyse par hybridation moléculaire d'acides nucléiques. Le procédé utilise également des trousses pour les personnes faisant une telle analyse. La trousse comprend alors différents réactifs nécessaires à cette analyse, le cas échant du tampon d'extraction pour analyse par hybridation d'acides nucléiques, et tout réactif nécessaire, par exemple des réactifs spécifiques des réactions PCR.

Ainsi, par exemple la trousse peut comprendre en outre les réactifs nécessaires à des analyses universelles par RT-PCR tels que:le Kit Titan One Tube RT-PCR (Roche) ainsi que les règles à suivre pour définir les amorces d'amplification et sondes spécifiques à inclure suivant les besoins dans ce protocole optimalisé.

Elle peut comprendre en outre les réactifs nécessaires à des analyses spécifiques par PCR pour la détection d'un ou plusieurs agents pathogènes dans du matériel végétal à savoir: les couples d'amorces ciblant un pathogène ou une association de pathogènes tels que:
PNRSV 10F et PNRSV 10R pour la détection du Prunus Necrotic Ringspot Virus,
ASGV 5F et ASGV 5R pour la détection de l'Apple Stem Grooving Virus,
PDV 17F et PDV 12R pour la détection du Prune Dwarf Virus,
ASPV 4F et ASPV 4R pour la détection de l'Apple Stem Pitting Virus,
ApMV 1 F et ApMV 1 R pour la détection de l'Apple Mosaïc Virus,
ACLSV 5F et ACLSV 8R pour la détection de l'Apple Chlorotic Leaf Spot Virus,

L'invention sera illustrée ci-dessous par la description d'exemples d'exécution, avec référence aux figures annexées, dans lesquelles :
La figure 1 est une vue en coupe transversale d'une première forme d'exécution d'un dispositif de prélèvement conçu pour la mise en oeuvre d'un procédé suivant l'invention;
les figures 2 et 3 illustre un moyen de classement et de transport d'échantillons prélevés grâce au dispositif de prélèvement illustré à la Figure 1, et
la figure 4 illustre une seconde forme d'exécution d'un dispositif de prélèvement conçu pour la mise en oeuvre d'un procédé selon l'invention.

### Exemples

### Exemple 1

### Détection du virus PNRSV ( Prunus necrotic ringspot virus) dans différents rameaux de cerisiers infectés par une RT-PCR sur extrait brut

On effectue une analyse par hybridation d'acides nucléiques suivant l'invention en prélevant par temps sec des échantillons de rameaux d'arbres fruitiers à envoyer au laboratoire en vue de détecter la présence d'un agent phytopathogène par analyse RT-PCR.

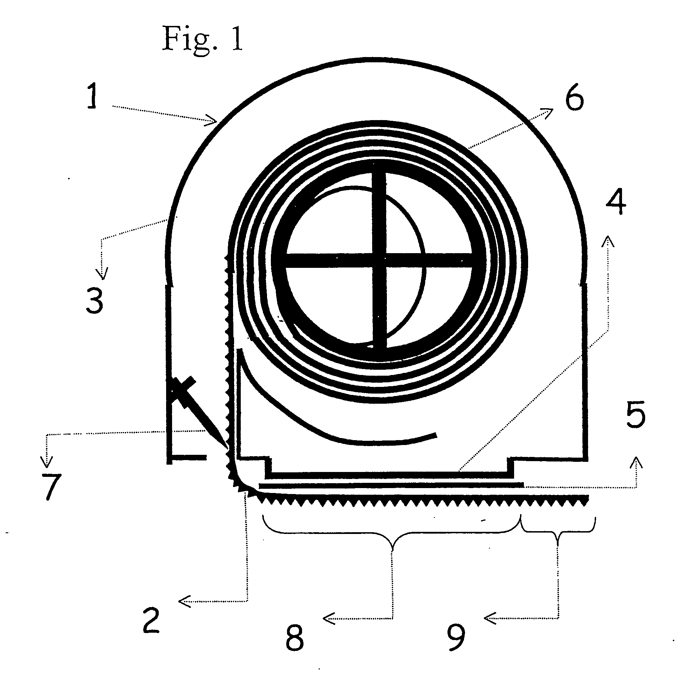

Dans cet exemple d'exécution, on utilise un dispositif de prélèvement 1 représenté à la Fig. 1. Le papier de verre 2 commercialisé sous l'appellation S.A.M. Corindon Extra Grain 60 est intégré dans un boîtier 3 pouvant facilement être tenu en main et présentant une surface plane 4 sur laquelle vient se fixer le papier de verre 2 au moyen d'un dispositif de fixation 5, qui peut être une bande adhésive, un papier Velcro ou tout autre système de fixation. Le boîtier 3 contient un dévidoir 6 permettant de libérer au fur et à mesure de l'échantillonnage de nouvelles surfaces de papier de verre vierge, après que la lame 7 a coupé le papier de verre chargé de l'échantillon de matériel biologique. Le papier de verre vierge vient se déposer sur une zone de prélèvement d'échantillon 8. Une zone 9 qui ne se couvre pas d'échantillon de matériel biologique est prévue à l'extrémité du papier de verre. L'utilisateur peut prendre cette zone 9 entre les doigts ce qui permet de détacher le papier de verre qui s'est couvert de matériel biologique dans sa zone 8 et d'obtenir sa coupure par la lame 7.

Trois prélèvements sont effectués en verger sur des rameaux d'un cerisier infecté par le PNRSV. On réalise un prélèvement sur un rameau d'un an, par un mouvement rectiligne appuyé, appliqué transversalement par rapport au sens des fibres végétales. Le mouvement de frottement contre le rameau doit se poursuivre jusqu'à ce que le bois de coeur du rameau apparaisse. A ce moment, des fragments de tissus vasculaires sont retenus sur le papier de verre (aussi appelé papier émeri ou papier sablé).

Après chaque prélèvement, le papier de verre 2 chargé de tissu de cerisier est détaché du boîtier 3 au moyen de la lame 7 comme décrit ci-dessus.

Il suffit que ce papier de verre chargé soit laissé quelques instants à l'air ambiant pour qu'on en constate la déshydratation. Les fragments de tissus sous-corticaux prélevés sur le rameau de cerisier sèchent rapidement sur le papier de verre et restent bien verts.

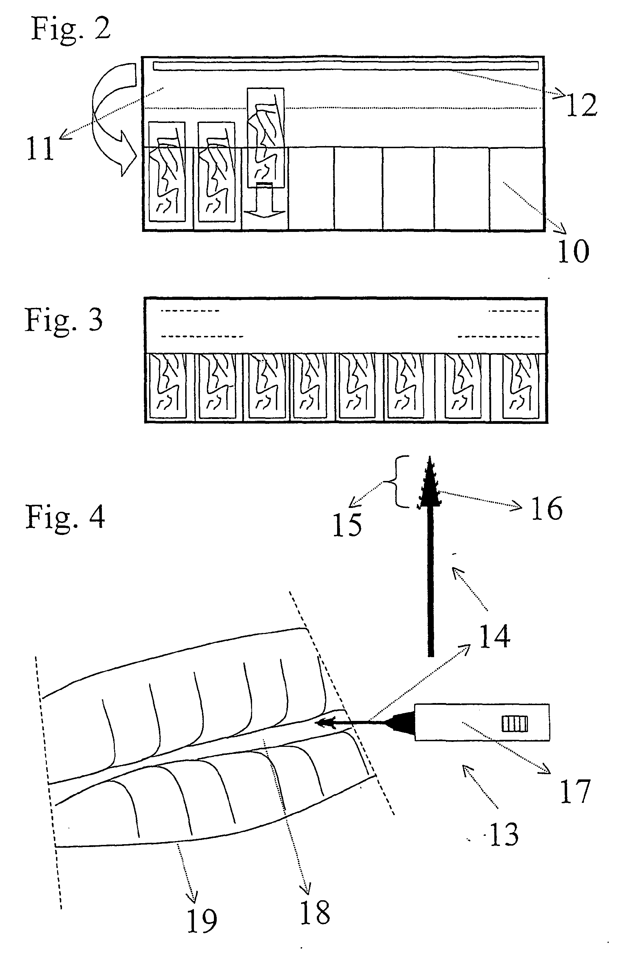

L'utilisateur peut alors prendre chaque échantillon récolté par la zone 9 prévue sur le papier de verre 2 et le placer, comme illustré à la Fig. 3, dans une des logettes 10 d'une pochette de transport 11 prévue à cette fin. Les pochettes 11, une fois remplies d'échantillons, sont fermées en repliant leur partie supérieure, qui est munie d'un papier adhésif 12, protégé par une bandelette de papier non représentée, que l'on retire juste avant de fermer la pochette.

Comme on le voit à la Fig. 3, une fois la pochette 11 fermée, la face tournée vers l'utilisateur comprend des zones permettant une identification précise des échantillons grâce à des signes distinctifs qui peuvent être des indications manuscrites concernant la date de prélèvement, le demandeur de l'analyse, le type d'analyse, l'origine et le numéro des échantillons, ou encore un code barre. De cette manière, la traçabilité de l'échantillon est garantie. La pochette peut dès lors être insérée dans une enveloppe postale pour un envoi au laboratoire par courrier.

Après réception au laboratoire, les papiers de verre 2 chargés du matériel végétal à analyser sont délicatement retirés de la pochette 11 par leur zone 9 et placés individuellement au fond d'un tube en verre de 15 ml à bouchon visé contenant 1,5 ml de tampon d'extraction SCPAP (décrit dans Minsavage et al., 1994. Development of a polymerase chain reaction protocol for detection of Xylella fastidiosa in plant tissue. Phytopathology 84:138-142).

Chaque tube est passé au vortex pendant 30 secondes pour libérer les fragments de tissus présents sur le papier de verre et ensuite laissé en incubation à 4°C pendant 10 minutes. 500 µl de jus sont récupérés dans un tube Eppendorf de 1.5 ml et centrifugés à 10 000 RPM pendant 5 minutes. 10µl du jus clarifié (ou surnageant) est récupéré et dilué dans 990 µl d'eau distillée.

2 µl du jus dilué est ajouté aux 23 µl du mix RT-PCR composé sur base du Kit TITAN One tube RT-PCR (Roche) et suivant les prescriptions du fabricant auquel ont été ajoutés les 0,5 ul de chaque amorce PNRSV 10F (TTC TTG AAG GAC CAA CCG AGA GG) et PNRSV 10R (GCT AAC GCA GGT AAG ATT TCC AAG C) à 20 µM. Les tubes sont ensuite soumis à la réaction RT-PCR sur un Thermocycleur Mastercycler (Eppendorf) suivant le cycle 30 minutes à 50°C, 5 minutes à 94°C, 30 secondes à 94 °C, 45 secondes à 55°C,1 minute à 72°C (ces trois dernières étapes sont répétées 35 fois) puis 10 minutes à 72°C.

Les produits d'amplification sont révélés sur un gel d'agarose 1,5 % avec coloration au bromure d'éthidium. Les bandes spécifiques à 348 pb sont présentes pour les 3 prélèvements réalisés.

Les échantillons peuvent être analysés directement après leur arrivée au laboratoire, ou être conservés dans leur pochette 11 à température ambiante pour analyse ultérieure.

### Exemple 2

### Détection du virus PNRSV (Prunus necrotic ringspot virus) dans différents rameaux de cerisiers infectés par une RT-PCR sur acides nucléiques totaux (ANT) purifiés

Le prélèvement des échantillons est réalisé de la même manière que dans l'exemple 1 ci-dessus.

Par contre, un protocole d'extraction et de purification des acides nucléiques totaux est appliqué suivant le protocole de S. Spiegel, S.W. Scott, V. Bowman-Vance, Y. Tam, N.N. Galiakparov, and A. Rosner 1996. Improved detection of Prunus necrotic ringspot virus by the polymerase chain reaction. Eur. J. PI. Pathol. 102:681-685. Les papiers de verre chargés en matériel végétal sont placés dans un tube Falcon de 15 ml contenant 2 ml du tampon d'extraction décrit. Après agitation vigoureuse pendant 1 minute à 4°C, 500 µl du jus extrait est récupéré en vue d'une extraction suivant le protocole décrit par Spiegel et al., 1996.

A titre de comparaison, une extraction identique d'acides nucléiques totaux est également réalisée suite à un protocole classique de prélèvement d'échantillons, à savoir; la taille au sécateur, au champ, de rameaux.

Pour garantir la validité du test, on sélectionne les mêmes rameaux que ceux sur lesquels l'échantillonnage a déjà été effectué grâce au dispositif de prélèvement 1 de l'invention.

Ces rameaux sont ramenés au laboratoire où un écorçage superficiel de chacun d'eux est réalisé sur environ 5 cm de long à l'aide d'une lame de scalpel n°3 pour éliminer l'écorce. Sur la même zone, à l'aide d'une lame de scalpel n° 4, les tissus vasculaires sont grattés jusqu'au bois de coeur pour obtenir environ 400 mg de ces tissus. Ceux-ci sont récoltés, pesés et placés dans une pochette de broyage en plastique munie à l'intérieur d'un filet en nylon, avec ajout de 10 fois le volume de tampon d'extraction décrit par Spiegel *et al., 1996* (soit 4 ml pour 400 mg de tissus). Le broyage est effectué au moyen d'un homogénéisateur à billes de type Holmex jusqu'à obtention d'une déstructuration complète des tissus. 500 µl du macérât est récupéré en vue d'une extraction suivant le protocole décrit. Toutes ces opérations d'écorçage, de grattage, de récolte, de pesée et de broyage doivent se dérouler le plus rapidement possible en laissant en permanence les tissus prélevés à basse température (1 à 2 °C).

Après les étapes d'extraction, la densité optique des solutions d'acides nucléiques issues des deux modes de prélèvement est mesurée au spectrophotomètre (LKB Biochrom Ultrospec II, UK) à 260 nm et 280 nm afin de déterminer la concentration des solutions et le degré de pureté.

Comme on le voit au Tableau 1 ci-dessous, les prélèvements effectués avec le dispositif de prélèvement 1 de l'invention donnent des concentrations en acides nucléiques totaux (ANT) de 215 µg/ml, 72 µg/ml et 222 µg/ml avec des degrés de pureté respectifs de 1.34, 1.55 et 1.34. Les prélèvements effectués de manière classique donnent des concentrations en acides nucléiques totaux de 138 µg/ml, 119 µg/ml et 86 µg/ml avec des degrés de pureté respectifs de 1.56, 1.36 et 1.48.

**Tableau 1**

| | Rameau 1 | | Rameau 2 | | Rameau 3 | |
|---|---|---|---|---|---|---|
| | ANT (µg/ml) | Degré de pureté | ANT (µg/ml) | Degré de pureté | ANT (µg/ml) | Degré de pureté |
| Invention | 215 | 1.34 | 72 | 1.55 | 222 | 1.34 |
| Procédé classique | 138 | 1.56 | 119 | 1.36 | 86 | 1.48 |

Les résultats obtenus montrent que le prélèvement effectué suivant l'invention permet d'obtenir une concentration en acides nucléiques totaux comparables à celle de la technique classique, et qu'en terme de degré de pureté, la qualité des acides nucléiques totaux extraits est similaire.

Pour la réaction d'amplification, 2 µl des acides nucléiques totaux dilués 100 x sont ajoutés aux 23 µl du mix RT-PCR composé sur base du Kit TITAN One tube RT-PCR (Roche) et suivant les prescription du fabriquant auquel ont été ajouté les 0,5 µl de chaque amorce PNRSV 10F (TTC TTG AAG GAC CAA CCG AGA GG) et PNRSV 10R (GCT AAC GCA GGT AAG ATT TCC AAG C) à 20 µM. Les tubes sont ensuite soumis à la réaction RT-PCR sur un Thermocycleur Mastercycler (Eppendorf) suivant le cycle 30 minutes à 50°C, 5 minutes à 94°C, 30 secondes à 94 °C, 45 secondes à 55°C,1 minute à 72°C (ces trois dernières étapes sont répétées 35 fois) puis 10 minutes à 72°C.

Les produits d'amplification sont révélés sur un gel d'agarose 1,5 % avec coloration au bromure d'éthidium. Les bandes spécifiques à 348 pb sont présentes à la fois pour les 3 prélèvements réalisés suivant l'invention et pour les 3 prélèvements classiques.

### Exemple 3

### Détection par PCR en Temps réel du virus BSV sur bananier à partir de prélèvements réalisés dans la nervure principale d'une feuille

Comme on le voit à la Fig. 4, on a utilisé dans cet exemple d'exécution de l'invention un dispositif de prélèvement 13 plus particulièrement adapté pour le prélèvement d'échantillons sur des tissus profonds.

Le dispositif 13 est constitué d'un stylet 14 en plastique rigide ou en métal de 4 cm de long et de 3 mm de diamètre dont une des extrémités est constituée d'un cône 15 de 0.5 cm de diamètre à la base et de 1 cm de long. Le cône 15 est muni d'aspérités 16 en forme de cuillères pointues de 1 mm de haut, réparties à la surface de celui-ci.

Le stylet 14 est verrouillé sur le mandrin d'une micro-perceuse 15. Le prélèvement se fait par rotation à très basse vitesse (500 RPM) du stylet 14 qui pénètre la nervure principale 18 de la feuille de bananier 19. La rotation dure environ 1 à 2 secondes.

Le stylet 14 chargé de matériel végétal est ensuite récupéré, débarrassé des tissus excédentaires, laissé à sécher quelques instants à l'air ambiant. Un deuxième prélèvement est effectué de la même manière avec un second stylet. Les stylets sont placés dans une pochette du type de la pochette 11 montrée à la Fig. 3 et laissé à température ambiante avant son transport vers le laboratoire.

En parallèle et à titre de comparaison, un morceau de 5 cm de long est découpé au scalpel dans la nervure principale de la même feuille 19 et immédiatement congelé en attendant son transport vers le laboratoire.

Dès réception au laboratoire, un des deux stylets chargé de matériel végétal est placé dans un tube Falcon de 15. ml contenant 3 ml de tampon d'extraction (137mM NaCl, 8 mM Na₂HPO₄, 1,5 mM KH₂PO₄, 2,7 mM KCI, 3 mM NaN₃, 0.05 % Tween 20, et 80 mM Na₂SO₃, pH 7,2 à 7,4).

Le second stylet est conservé dans la pochette à température ambiante pendant quatre semaines pour analyse ultérieure.

Le tube Falcon est passé au vortex pendant 1 minute pour libérer les fragments de tissus et ensuite laissé en incubation à 4°C pendant 5 minutes. 500 µl de jus sont récupérés dans un tube Eppendorf de 1.5 ml et centrifugés à 7000 RPM pendant 10 minutes. 100µl du surnageant clarifié est récupéré et dilué dans 900 µl d'eau distillée.

1 µl du jus dilué est ajouté aux 49 µl du mix PCR composé de 0.2 mM de chaque dNTP, 1 unité de Taq DNA polymérase (Roche), 1,4 x tampon PCR, 2 mM MgCl2 (concentration finale), 0,28 µM de chaque amorce et 0,1 µM des sondes à MGB telles que définies dans M. Delanoy, M. Salmon, and J. Kummert, 2003. Development of Real- Time PCR for the Rapid Detection of Episomal Banana streak virus (BSV). Plant disease 87:33-38. Les tubes sont ensuite soumis à la réaction PCR avec détection en temps réel sur un Thermocycleur GeneAmp 5700 Sequence Detection (Applied Biosystems) suivant le cycle 1 minute à 95°C, 30 secondes à 95 °C, 20 secondes à 53°C,1 minute à 60°C (ces trois dernières étapes sont répétées 50 fois).

L'intensité de fluorescence mesurée en cours de cycles est convertie en graphique et la valeur du Ct (cycle à partir duquel, l'intensité de la fluorescence passe au dessus du seuil) est déterminée.

Des essais comparatifs ont été menés entre un prélèvement classique (broyage de 400 mg de nervures congelées de feuille de bananier dans 4 ml du même tampon d'extraction au moyen d'un homogénéisateur Ho!mex) et l'exemple 2 de l'invention telle que décrit ci-dessus.

De plus, quatre semaines après cette première analyse une nouvelle préparation de l'extrait brut à été réalisée de la même manière sur le second stylet qui avait été conservé à température ambiante dans la pochette et sur 400 mg de nervure congelée.

Comme indiqué dans le Tableau 2 ci-dessous, les résultats pour la préparation classique et l'invention sont donnés respectivement par des valeurs de Ct (Cycle threshold correspondant à un seuil de 0.025) de 35 et de 30 le jour du prélèvement et de 35 et 31, quatre semaines après le prélèvement. Les valeurs finales de fluorescence sont respectivement de 0,21 et 0,30 le jour du prélèvement et de 0.19 et 0.28 quatre semaines après le prélèvement.

**Tableau 2**

| | Préparation classique | | Invention | |
|---|---|---|---|---|
| | Ct (seuil 0.025) | Fluorescence finale | Ct (seuil 0.025) | Fluorescence finale |
| Analyse le jour du prélèvement | 35 | 0.21 | 30 | 0.30 |
| Analyse 4 semaines après le prélèvement | 35 | 0.19 | 31 | 0.28 |

On constate donc que l'invention permet d'obtenir un signal de fluorescence plus précoce et une valeur finale plus élevée qu'avec la technique classique. De plus les résultats obtenus avec le matériel préparé quatre semaines au préalable sont aussi bons que ceux obtenus le jour du prélèvement.

### Exemple 4

### Détection par RT-PCR du virus ASGV ( Apple Stem Grooving Virus) sur rameaux de pommier reçus en tant que matériel frais au laboratoire

Cet exemple montre de quelle manière le procédé d'analyse par hybridation moléculaire d'acides nucléiques suivant l'invention est concrètement applicable pour un laboratoire de diagnostic en phytopathologie. Le dispositif de prélèvement employé ici est constitué d'un simple rectangle de 1,5 x 3 cm découpé dans du papier de verre GUMIC P 100.

En effet, les conditions de travail sont telles qu'il n'est pas nécessaire de disposer d'un distributeur, ni de pénétrer dans des couches profondes de tissus. Une forme simplifiée de dispositif de prélèvement suivant l'invention est donc suffisante.

Le rameau est déposé sur un plan de travail devant l'opérateur qui en tient l'extrémité, le papier de verre est maintenu sous l'index de la main libre de l'opérateur qui applique, avec une légère pression, un frottement transversal par rapport à l'axe longitudinal du rameau. Le frottement est poursuivi jusqu'à ce que le bois de coeur soit atteint. Ce prélèvement correspond à environ 30 mg de tissus. Le papier de verre chargé des tissus végétaux est ensuite placé au fond d'un tube en verre de 15 ml à bouchon vissé contenant 1 ml de tampon d'extraction TE à 4°C ( 50mM Tris, pH 8.0, 10mM EDTA). Tous les rameaux sont préparés de la même façon.

Le tube est passé au vortex pendant 30 secondes pour libérer les fragments de tissus et ensuite laissé en incubation à 4°C pendant 10 minutes. 500 µl de jus sont récupérés dans un tube Eppendorf de 1.5 ml et centrifugés à 10 000 RPM pendant 5 minutes. 10µl du surnageant clarifié est récupéré et dilué dans 990 µl d'eau distillée.

2 µl du jus dilué est ajouté aux 23 µl du mix RT-PCR composé sur base du Kit TITAN One tube RT-PCR (Roche) et suivant les prescription du fabriquant auquel ont été ajouté les 0,5 µl de chaque amorce à 20 µM (ASGV5F et ASGV5R) telles que définie dans J. Kummert, M. Vendrame, S. Steyer, and P. Lepoivre,2000. Development of routine RT-PCR tests for certification of fruit tree multiplication material. EPPO Bulletin 30: 441-448.

Les tubes sont ensuite soumis à la réaction RT-PCR sur un Thermocycleur Mastercycler (Eppendorf) suivant le cycle 30 minutes à 50°C, 5 minutes à 94°C, 30 secondes à 94 °C, 45 secondes à 55°C,1 minute à 72°C (ces trois dernières étapes étant répétées 35 fois) puis 10 minutes à 72°C.

Les produits d'amplification sont révélés sur un gel d'agarose 1,5 % avec coloration au bromure d'éthidium. La bande spécifique se situe à une hauteur de 344 pb.

On constate que ces résultats sont aussi probants que ceux effectués avec une méthode classique à partir d'un matériel végétal frais.

Comme on peut le constater à la lecture de ce qui précède, le procédé d'analyse suivant l'invention, grâce l'étape de prélèvement de échantillons de matériel biologique par des moyens de prélèvement abrasifs limite très efficacement les phénomènes d'oxydation. Les acides nucléiques cibles présents dans les tissus végétaux échantillonnés ne doivent pas directement être mis en présence de milieu liquide tamponné (contrairement au travail sur tissus frais).

Le procédé suivant l'invention ne nécessite le prélèvement que de 20 à 40 mg de matériel biologique, soit 5 à 10 fois moins que la technique classique.

Il est à noter que, si le procédé de l'invention permet un travail en laboratoire sur extrait brut, on ne sortira bien entendu pas du cadre de celle-ci si on effectue des étapes de purification supplémentaires.

En ce qui concerne les échantillons, ceux-ci peuvent être analysés un à un ou regroupés pour une analyse commune, en fonction des finalités recherchées.

## Revendications

1. Procédé d'analyse par hybridation moléculaire d'acides nucléiques, comprenent les étapes suivantes :
- prélèvement d'échantillons de matériel d'origine végétale sur des tissus profonds par un dispositif de prélèvement (1, 13)
- séchage des échantillons chargés sur les moyens de prélèvements,
- extraction des acides nucléiques, comprenant une étape d'immersion dans un tampon d'extraction des moyens de prélèvement (2, 15, 16) chargés de leurs échantillons respectifs de matériel d'origine végétale,
**caractérisé en ce que** les moyens de prélèvement comprennent une surface externe abrasive avec des aspérités aptes à faire une incision dans la surface dudit matériel et à retenir des cellules provenant de tissus profonds dudit matériel, les moyens de prélèvements abrasifs comportent une matière solide choisie dans le groupe consistant en la silice, le verre, les métaux, les fibres de carbone et les matières plastiques.

2. Procédé suivant la revendication 1, **caractérisé en ce que** le prélèvement d'échantillons de matériel d'origine végétale est effectué à l'air ambiant.

3. Procédé suivant l'une quelconque des revendications, 1 et 2, **caractérisé en ce que** le prélèvement d'échantillons est effectué hors d'un laboratoire où aura lieu l'analyse, et **en ce que** le procédé comporte une étape de transport des moyens de prélèvements abrasifs (2, 15, 16) chargés de leurs échantillons respectifs de matériel d'origine végétale vers ledit laboratoire.

4. Procédé suivant l'une quelconque des revendications précédentes, **caractérisé en ce que** l'étape d'extraction des acides nucléiques, comprend
- une étape d'agitation dans le tampon d'extraction
- une étape de séparation, et
- une étape de récupération de jus clarifié contenant les acides nucléiques.

5. Procédé suivant la revendication 4, **caractérisé en ce que** l'étape de séparation consiste en une centrifugation, dont le surnageant constitue le jus clarifié.

6. Procédé suivant l'une des revendications précédentes, **caractérisé en ce que** l'analyse par hybridation moléculaire se fait par polymerase chain reaction (PCR).

7. Procédé suivant l'une quelconque des revendications précédentes, **caractérisée en ce que** l'analyse par hybridation moléculaire d'acides nucléiques est effectuée en vue de déterminer la présence d'un agent pathogène dans le matériel d'origine végétale.

8. Procédé suivant l'une quelconque des revendications précédentes, **caractérisé en** l'utilisation d'une trousse pour la mise en oeuvre du procédé la trousse comportant un dispositif de prélèvement (1, 12) comprenant lesdits moyens de prélèvement abrasifs (2, 14, 15) aptes à retenir du matériel d'origine végétale sous forme de cellules.

9. Procédé suivant la revendication 8, **caractérisée en ce que** le dispositif de prélèvement (2, 13) comprend un support (3, 5, 6, 14, 17) apte à supporter les moyens de prélèvement abrasifs (2, 15, 16).

10. Procédé suivant l'une quelconque des revendications 8 à 9, **caractérisée en ce que** la trousse comprend des moyens (11) de transport des moyens de prélèvement abrasifs (2, 15, 16)

11. Procédé suivant l'une quelconque des revendications 8 à 10, **caractérisée en ce que** la trousse comprend des moyens d'identification des moyens de prélèvement abrasifs.

12. Procédé suivant l'une quelconque des revendications 8 à 11, **caractérisé en ce que** la trousse comprend du tampon d'extraction pour analyse par hybridation d'acides nucléiques.

13. Procédé suivant l'une quelconque des revendications 8 à 12, **caractérisée en ce que** la trousse comprend des réactifs spécifiques des réactions PCR.

## Claims

1. Method for analysis by molecular hybridization of nucleic acids, comprising the following steps :
- sampling material of plant origin from deep tissues by a sampling device (1, 13),
- drying the samples loaded on the sampling means,
- extracting the nucleic acids, comprising a step of immersing the sampling means (2, 15, 16), loaded with their respective samples of plant origin, in an extraction buffer,
**characterised in that** the sampling means comprise an outer abrasive surface with asperities capable of making an incision in the surface of said material and to retain the cells from the deep tissues of said material, wherein the abrasive sampling means comprise a solid material selected from the group consisting of silica, glass, metals, carbon fibres and plastics.

2. Method according to claim 1, **characterised in that** the sampling of the material of plant origin is conducted in ambient air.

3. Method according to any one of claims 1 and 2, **characterised in that** the sampling is conducted outside a laboratory where the analysis will be performed, and **in that** the method comprises a step of the transport of the abrasive sampling means (2, 15, 16), loaded with their respective samples of material of plant origin, to said laboratory.

4. Method according to any one of the preceding claims, **characterized in that** the step of extracting the nucleic acids comprises
- an agitation step in the extraction buffer,
- a separation step, and
- a step of obtaining the clarified solution containing the nucleic acids.

5. Method according to claim 4, **characterized in that** the separation step consists of a centrifugation, wherein the supernatant constitutes the clarified solution.

6. Method according to any one of the preceding claims, **characterized in that** the analysis by molecular hybridization is performed by polymerase chain reaction (PCR).

7. Method according to any one of the preceding claims, **characterized in that** the analysis by molecular hybridization of nucleic acids is performed in order to determine the presence of a pathogenic agent in the material of plant origin.

8. Method according to any one of the preceding claims, **characterized in** the use of a kit for implementing the method, the kit comprising a sampling device (1, 12), comprising said abrasive sampling means (2, 14, 15) that is capable of retaining the material of plant origin in the form of cells.

9. Method according to claim 8, **characterized in that** the sampling device (2, 13) comprises a support (3, 5, 6, 14, 17) that is capable of supporting the abrasive sampling means (2, 15, 16).

10. Method according to any one of claims 8 to 9, **characterized in that** the kit comprises means (11) for the transport of the abrasive sampling means (2, 15, 16).

11. Method according to any one of claims 8 to 10, **characterized in that** the kit comprises means for identification of the abrasive sampling means.

12. Method according to any one of claims 8 to 11, **characterized in that** the kit comprises an extraction buffer for the analysis by hybridization of nucleic acids.

13. Method according to any one of claims 8 to 12, **characterized in that** the kit comprises specific reagents for PCR reactions.

## Patentansprüche

1. Verfahren zur Analyse durch molekulare Hybridisierung von Nukleinsäuren, das die folgenden Schritte umfasst:
- Entnahme von Materialproben pflanzlichen Ursprungs aus Tiefengewebe durch eine Entnahmevorrichtung (1, 13),
- Trocknen der versetzten Proben auf den Entnahmemitteln,
- Extraktion der Nukleinsäuren, die einen Schritt des Eintauchens der Entnahmemittel (2, 15, 16), die mit ihren jeweiligen Proben aus Material pflanzlichen Ursprungs versetzt sind, in einen Extraktionspuffer umfasst,
**dadurch gekennzeichnet, dass** die Entnahmemittel eine äußere abrasive Oberfläche mit Unebenheiten umfassen, die in der Lage sind, einen Einschnitt in die Oberfläche des Materials zu machen, und Zellen festzuhalten, die aus Tiefengewebe des Materials stammen, wobei die abrasiven Entnahmemittel einen Feststoff umfassen, ausgewählt aus der Gruppe bestehend aus Siliciumdioxid, Glas, Metallen, Kohlenstofffasern und Kunststoff.

2. Verfahren nach Anspruch 1, **dadurch gekennzeichnet, dass** die Probenentnahme von Material pflanzlichen Ursprungs bei Umgebungsluft durchgeführt wird.

3. Verfahren nach einem der Ansprüche 1 und 2, **dadurch gekennzeichnet, dass** die Probenentnahme außerhalb eines Labors, in dem die Analyse stattfinden wird, durchgeführt wird, und **dadurch**, dass das Verfahren einen Schritt des Transports der abrasiven Entnahmemittel (2, 15, 16), die mit ihren jeweiligen Proben aus Material aus pflanzlichen Ursprungs versetzt sind, zum Labor umfasst.

4. Verfahren nach einem der vorhergehenden Ansprüche, **dadurch gekennzeichnet, dass** der Schritt der Extraktion der Nukleinsäuren
- einen Schritt des Rührens in dem Extraktionspuffer,
- einen Schritt der Trennung, und
- einen Schritt der Gewinnung von geklärtem Saft umfasst, der die Nukleinsäuren umfasst.

5. Verfahren nach Anspruch 4, **dadurch gekennzeichnet, dass** der Schritt zur Trennung aus einer Zentrifugation besteht, deren Überstand den geklärten Saft bildet.

6. Verfahren nach einem der vorhergehenden Ansprüche, **dadurch gekennzeichnet, dass** die Analyse durch molekulare Hybridisierung durch Polymerasekettenreaktion (PCR) erfolgt.

7. Verfahren nach einem der vorhergehenden Ansprüche, **dadurch gekennzeichnet, dass** die Analyse durch molekulare Hybridisierung von Nukleinsäuren durchgeführt wird, um die Gegenwart eines Pathogens in dem Material pflanzlichen Ursprungs zu ermitteln.

8. Verfahren nach einem der vorhergehenden Ansprüche, **gekennzeichnet durch** die Verwendung eines Kits zum Einsatz des Verfahrens, wobei der Kit eine Entnahmevorrichtung (1, 12) umfasst, die die abrasiven Entnahmemittel (2, 14, 15) umfasst, die in der Lage sind, Material pflanzlichen Ursprungs in Form von Zellen festzuhalten.

9. Verfahren nach Anspruch 8, **dadurch gekennzeichnet, dass** die Entnahmevorrichtung (2, 13) einen Träger (3, 5, 6, 14, 17) umfasst, der in der Lage ist, die abrasiven Entnahmemittel (2, 15, 16) zu tragen.

10. Verfahren nach einem der Ansprüche 8 bis 9, **dadurch gekennzeichnet, dass** der Kit Mittel (11) zum Transport der abrasiven Entnahmemittel (2, 15, 16) umfasst.

11. Verfahren nach einem der Ansprüche 8 bis 10, **dadurch gekennzeichnet, dass** der Kit Mittel zur Identifikation der abrasiven Entnahmemittel umfasst.

12. Verfahren nach einem der Ansprüche 8 bis 11, **dadurch gekennzeichnet, dass** der Kit Extraktionspuffer für die Analyse durch Hybridisierung von Nukleinsäuren umfasst.

13. Verfahren nach einem der Ansprüche 8 bis 12, **dadurch gekennzeichnet, dass** der Kit spezifische Reagenzien für die PCR-Reaktionen umfasst.
